**Europäisches Patentamt**

**European Patent Office**

**Office européen des brevets**

(19)

(11) **EP 1 199 704 A2**

(12) **EUROPÄISCHE PATENTANMELDUNG**

| | |
|---|---|
| (43) Veröffentlichungstag:<br>**24.04.2002   Patentblatt 2002/17** | (51) Int Cl.7: **G10L 15/06** |

(21) Anmeldenummer: **01124585.9**

(22) Anmeldetag: **15.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **17.10.2000   DE 10051257**

(71) Anmelder:
- **Philips Corporate Intellectual Property GmbH**
  **52064 Aachen (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder: **Meyer, Carsten, Dr.**
**52064 Aachen (DE)**

(74) Vertreter: **Volmer, Georg, Dipl.-Ing. et al**
**Philips Corporate Intellectual Property GmbH,**
**Habsburgerallee 11**
**52064 Aachen (DE)**

(54) **Auswahl der alternativen Wortfolgen für diskriminative Anpassung**

(57)     Die Erfindung betrifft ein Verfahren zur diskriminativen Anpassung von Referenzmodellen eines Mustererkennungssystems, insbesondere von akustischen Referenzmodellen eines Spracherkennungssystems, bei dem, ausgehend von einer Menge von gegebenen Mustern, deren Klassenzugehörigkeit jeweils bekannt ist oder geschätzt wird, und ausgehend von gegebenen Referenzmodellen,

- für eines der gegebenen Muster jeweils eine erste bewertete Klassenzugehörigkeit unter Verwendung der gegebenen Referenzmodelle erzeugt wird,
- bei Abweichung dieser ersten Klassenzugehörigkeit von der bekannten oder geschätzten Klassenzugehörigkeit diese erste Klassenzugehörigkeit als alternative Klassenzugehörigkeit zur bekannten oder geschätzten Klassenzugehörigkeit zugeordnet wird,

- anderenfalls für das gegebene Muster eine zweite bewertete Klassenzugehörigkeit unter Verwendung der gegebenen Referenzmodelle erzeugt wird, und, sofern der Unterschied in den Bewertungen der ersten und zweiten Klassenzugehörigkeit kleiner ist als ein erster Schwellwert, diese zweite Klassenzugehörigkeit als alternative Klassenzugehörigkeit zur bekannten oder geschätzten Klassenzugehörigkeit zugeordnet wird,

unter Verwendung der so bestimmten Zuordnung/Zuordnungen eine Anpassung von mindestens einem der gegebenen Referenzmodelle durchgeführt wird.

**Beschreibung**

Die Erfindung betrifft ein Verfahren zur diskriminativen Anpassung von Referenzmodellen eines Mustererkennungssystems, insbesondere von akustischen Referenzmodellen eines Spracherkennungssystems.

Bei der automatischen Spracherkennung, d.h. bei der maschinellen Überführung von gesprochener Sprache in Text, werden üblicherweise Mustererkennungsverfahren eingesetzt. D.h., die tatsächlich gesprochene Wortfolge eines unbekannten Sprachsignals wird ermittelt, indem man die Bestandteile des unbekannten Sprachsignals mit gespeicherten Referenzmodellen vergleicht. Diese gespeicherten Referenzmodelle erhält man dabei üblicherweise durch einen vorbereitenden Trainingsschritt, d.h. die Referenzmodelle ergeben sich mittels Durchführung einer Trainingsprozedur, die üblicherweise die Existenz einer Menge von gegebenen akustischen Sprachsignalen, deren zugehörige gesprochene Wortfolge jeweils bekannt ist, voraussetzt.

Üblicherweise führt die Trainingsprozedur dazu, dass die Referenzmodelle u.a. eine gewisse Information über die akustische Struktur einer Sprache, beispielsweise also über die einzelnen Laute der Sprache kodieren. Diesen Teil der Referenzmodelle bezeichnet man daher als akustische Referenzmodelle oder kurz als akustische Modelle. Darüber hinaus können in manchen Situationen auch noch weitere Charakteristika einer Sprache oder eines gewissen Ausschnitts einer Sprache trainiert werden. Beispiele dafür sind statistische Eigenschaften über die Abfolge der Wörter oder auch Modelle über die grammatische Struktur von Sätzen. Solche Eigenschaften können beispielsweise in sogenannten Sprachmodellen (im Unterschied zu den akustischen Modellen) erfasst werden.

Zum Training der akustischen Referenzmodelle kann man z.B. das sogenannte Maximum-Likelihood Training einsetzen. Dabei werden die Parameter der Referenzmodelle in der Weise geschätzt, dass die bedingten Wahrscheinlichkeiten (likelihoods)

$$P(X_r \mid W)$$

($X_r$: Sprachsignal, $W$: dazugehörige gesprochene Wortfolge, $P(X_r \mid W)$: durch das akustische Referenzmodell gegebene bedingte Wahrscheinlichkeit von $X_r$ gegeben $W$), dass die tatsächlich gesprochenen Wortfolgen die akustischen Sprachsignale erzeugen, maximiert werden. Weiterhin werden diskriminative Trainingsverfahren benutzt, die üblicherweise bereits von vorhandenen akustischen Referenzmodellen ausgehen, die z.B. nach der Maximum-Likelihood Methode (vor-) trainiert wurden.

Verfahren zum diskriminativen Training der akustischen Referenzmodelle sind z.B. aus dem Konferenzbeitrag "Schlüter, R., Macherey, W., Müller, B. und Ney, H.: A Combined Maximum Mutual Information and Maximum Likelihood Approach for Mixture Density Splitting, Proc. EUROSPEECH-99, pp. 1715-1718, Budapest, Hungary, 1999" bekannt. Die Autoren präsentieren dort eine einheitliche Darstellung verschiedener bekannter diskriminativer Trainingsverfahren.

In dieser Darstellung ist es den besprochenen diskriminativen Trainingsverfahren gemeinsam, dass sie versuchen, die Diskriminierung zwischen der tatsächlich gesprochenen Wortfolge (spoken words $W_r$) und einer Menge von alternativen Wortfolgen (set of alternative word sequences $M_r$) zu optimieren. Die tatsächlich gesprochene Wortfolge ($W_r$) wird als bekannt vorausgesetzt. Die alternativen Wortfolgen sind solche Wortfolgen, die eine "gewisse Ähnlichkeit" zur gesprochenen Wortfolge aufweisen. Dabei kann die tatsächlich gesprochene Wortfolge bei einigen diskriminativen Verfahren selbst auch ein Element der Menge der alternativen Wortfolgen sein.

Eine Möglichkeit, für ein Sprachsignal neben der bekannten gesprochenen Wortfolge eine solche Menge von alternativen Wortfolgen ($M_r$) zu erhalten, besteht darin, einen Erkennungsschritt durchzuführen. Dabei verwendet man ein Spracherkennungssystem, das nicht nur eine Wortfolge ("die erkannte Wortfolge"), sondern eine Menge verschiedener Wortfolgen liefert. Diese Menge kann dabei z.B. aus einer sogenannten N-best Liste oder auch aus einem sogenannten Wortgraphen bestehen. Alle in der Menge enthaltenen Wortfolgen sind dabei als mögliches Erkennungsergebnis anzusehen, d.h. sind hypothetisierte Kandidaten für die gesprochene Wortfolge, weswegen diese Menge im Folgenden als Kandidatenmenge bezeichnet wird. Diese Kandidatenmenge ist dann eine mögliche Wahl für die Menge der alternativen Wortfolgen ($M_r$).

Für die Erzeugung der Kandidatenmenge kann man auch ein Spracherkennungssystem einsetzen, das zusätzlich für jede Wortfolge der Kandidatenmenge eine reelle Zahl mitliefert, die im Folgenden als die Bewertung der Wortfolge bezeichnet wird, und die eine relative Rangordnung der Kandidatenwortfolgen in dem Sinne angibt, dass man die Kandidatenwortfolge mit der besten Bewertung als "die erkannte Wortfolge" auswählen würde. Dementsprechend wäre die Kandidatenwortfolge mit der zweitbesten Bewertung der zweite Kandidat für die erkannte Wortfolge, die z.B. als nächste benutzt werden könnte, wenn in einem Dialogsystem der Benutzer die zuerst vorgeschlagene Wortfolge mit der besten Bewertung als falsch erkannt zurückweist.

In der Praxis werden häufig Spracherkennungssysteme verwendet, die als Bewertung den negativen Logarithmus der bedingten Wahrscheinlichkeit (negative log-likelihood oder negative log-probability) benutzen, dass die Kandidatenwortfolge zu dem zu erkennenden Sprachsignal gehört:

$$-\log P(W|X_r)$$

(log: Logarithmusfunktion, $W$: Kandidatenwortfolge, $X_r$: Sprachsignal, $P(W \mid X_r)$: bedingte Wahrscheinlichkeit von $W$ gegeben $X_r$). Dabei handelt es sich bei der Wahrscheinlichkeit $P(W \mid X_r)$ nicht um die tatsächliche Wahrscheinlichkeit, die üblicherweise nicht bekannt ist, sondern um die sich aus den Referenzmodellen ergebende Wahrscheinlichkeit.

Es hat sich als günstig erwiesen, zur Erzeugung der Kandidatenmenge ein Spracherkennungssystem einzusetzen, das eben solch eine Bewertung für jede Kandidatenwortfolge liefert, und dabei die Erzeugung der Kandidatenmenge so zu steuern, dass unter allen möglichen Wortfolgen möglichst die Kandidatenwortfolgen mit den besten Bewertungen generiert werden. Dazu setzt man geeignete Verfahren zur Begrenzung der Suche innerhalb der möglichen Wortfolgen ein (pruning). Teilweise werden auch sogenannte N-best Suchverfahren verwendet.

In dem Konferenzbeitrag von Schlüter et al. werden die Unterschiede der dort dargestellten diskriminativen Trainingsverfahren auf die folgenden Eigenheiten zurückgeführt:

- auf die Auswahl der Menge der alternativen Wortfolgen ($M_r$),
- auf die Gewichtung der Bewertungsverhältnisse der Wortfolgen (Schlüter et al. verwenden den Logarithmus und mit einem Exponenten $\alpha$ potenzierte Wahrscheinlichkeiten (probabilities).) und
- auf die Glättung der gewichteten Bewertungsverhältnisse der einzelnen akustischen Sprachsignale der Trainingsmenge (smoothing function $f$).

Für das Verständnis der vorliegenden Erfindung ist es nützlich, speziell die beiden von Schlüter et al. vorgestellten diskriminativen Trainingsverfahren des korrektiven Trainings (corrective training, CT) und des falsifizierenden Trainings (falsifying training, FT) zu betrachten. Diese zwei Verfahren benutzen beide jeweils nur genau eine alternative Wortfolge in der Menge der alternativen Wortfolgen ($M_r$), weswegen sie weniger komplex sind als die anderen von Schlüter et al. vorgestellten Verfahren, die (zumindest potentiell) jeweils mehr als eine Wortfolge in der Menge der alternativen Wortfolgen ($M_r$) verwenden.

Das falsifizierende Training weist dabei gegenüber dem korrektiven Training den Vorteil auf, dass es die Trainingsmenge der gegebenen akustischen Sprachsignale besser ausnutzt, indem es für das Training der akustischen Referenzmodelle auch die richtig erkannten akustischen Sprachsignale verwendet, während das korrektive Training nur die falsch erkannten benutzt. Dies führt üblicherweise zu einer besseren Schätzung der akustischen Referenzmodelle, d.h. Spracherkennungssysteme, die mit falsifizierendem Training erzeugte akustische Referenzmodelle verwenden, weisen in der Regel niedrigere Fehlerraten in der Erkennung auf als solche, die mit korrektivem Training erzeugte akustische Referenzmodelle verwenden.

Dieser Vorteil des falsifizierenden Trainings gegenüber dem korrektiven Training bringt jedoch einige praktische Nachteile mit sich. Es wird eine Glättungsfunktion (smoothing function $f$) verwendet, die erst im Experiment optimiert werden kann und die Komplexität des Verfahrens erhöht. Weiter vergrößert sich durch die Benutzung aller akustischen Sprachsignale in der Menge der gegebenen akustischen Sprachsignale der Rechenaufwand beim Training der akustischen Referenzmodelle.

Aufgabe der Erfindung ist es daher, ein Verfahren der eingangs genannten Art anzugeben, dessen Menge der alternativen Wortfolgen ($M_r$) jeweils aus genau einer alternativen Wortfolge besteht und das die Trainingsmenge der gegebenen akustischen Sprachsignale gut ausnutzt, aber eine geringere Komplexität besitzt und niedrigeren Rechenaufwand erfordert als das falsifizierende Training.

Die Aufgabe wird durch ein Verfahren gemäß Patentanspruch 1 gelöst.

Die Grundidee des im Patentanspruch 1 genannten Verfahrens besteht darin, neben den falsch erkannten akustischen Sprachsignalen aus der Menge der gegebenen akustischen Sprachsignale auch diejenigen richtig erkannten zu nutzen, die wesentlich zur Verbesserung des Trainings der akustischen Referenzmodelle beitragen. Im Gegensatz zum falsifizierenden Training wird jedoch nicht notwendigerweise eine Glättungsfunktion verwendet und es werden auch nicht notwendigerweise alle richtig erkannten akustischen Sprachsignale benutzt. Statt dessen wird ein erster Schwellwert zur Auswahl der richtig erkannten akustischen Sprachsignale benutzt, für die eine Zuordnung einer alternativen Wortfolge zur gesprochenen Wortfolge des akustischen Sprachsignals erfolgt.

Abkürzend wurde in obigem Absatz davon ausgegangen, dass die zu einem gegebenen Sprachsignal erzeugte erste und ggf. auch die zweite Wortfolge durch einen Erkennungsschritt generiert wurde, weshalb von richtig und falsch erkannten akustischen Sprachsignalen gesprochen wurde. Der Gegenstand der Erfindung ist jedoch nicht darauf beschränkt, einen solchen Erkennungsschritt durchzuführen, sondern gilt für alle Erzeugungsverfahren.

Weiterhin ist die Erfindung nicht darauf beschränkt, dass die Anpassung der akustischen Referenzmodelle durch einen diskriminativen Trainingsschritt erfolgt. Sie umfasst auch alle anderen Ausführungsformen, die zur Anpassung der Referenzmodelle die erfindungsgemäß bestimmten Zuordnungen der jeweils alternativen Wortfolge verwenden. Dazu gehören z.B. auch diskriminative Adaptionsverfahren. Bei diesen Adaptionsverfahren wird die Trainingsmenge der gegebenen akustischen Sprachsignale auch als Adaptionsmenge bezeichnet.

Im abhängigen Anspruch 2 wird spezifiziert, dass zur Anpassung der akustischen Referenzmodelle nur die im Anspruch 1 explizit vorgesehenen Zuordnungen verwendet werden.

Die abhängigen Ansprüche 3 bis 6 beziehen sich auf Erfindungsvarianten, die durch Benutzung eines zweiten Schwellwertes die Trainingsmenge der gegebenen akustischen Sprachsignale verkleinern, Verfahren zur Bestimmung des ersten und zweiten Schwellwertes angeben und die vorab beschriebenen Verfahren zur Anpassung der akustischen Referenzmodelle als Baustein in einem für die diskriminative Anpassung üblichen Iterationszyklus benutzen. Auf diese Art erhält man ein vollständiges Anpassungsverfahren für akustische Referenzmodelle, das einfacher und in der Rechenzeit sparsamer ist als das bekannte falsifizierende Training.

Während bei den vorhergehenden Ansprüchen vorausgesetzt wurde, dass jeweils die gesprochene Wortfolge der gegebenen akustischen Sprachsignale bekannt ist, bezieht sich die Erfindung in Anspruch 7 auf den Fall, dass die gesprochene Wortfolge nicht bekannt ist, sondern geschätzt wird (unsupervised adaptation). Indem diese geschätzte Wortfolge die gesprochene Wortfolge ersetzt, lassen sich alle vorher bezeichneten Verfahren ansonsten unverändert weiterhin durchführen. Zur Schätzung der unbekannten gesprochenen Wortfolge kann dabei z.B. ein Spracherkennungssystem eingesetzt werden.

Die Erfindung bezieht sich aber in Anspruch 8 auch auf die Referenzmodelle selbst, die mittels eines der o.g. Verfahren zur diskriminativen Anpassung dieser Modelle erzeugt wurden, sowie im Anspruch 9 auf einen Datenträger, der solche Modelle speichert, und in Anspruch 10 auf ein Spracherkennungssystem, das solche Modelle verwendet.

Im Anspruch 11 wird die Erfindung für die diskriminative Anpassung der Referenzmodelle allgemeiner Mustererkennungssysteme, von denen das vorher besprochene Spracherkennungssystem einen Spezialfall darstellt, beansprucht.

In Anspruch 12 bezieht sich die Erfindung auf die Referenzmodelle selbst, die mittels eines der genannten Verfahren zur diskriminativen Anpassung dieser Modelle erzeugt wurden, sowie im Anspruch 13 auf einen Datenträger, der solche Modelle speichert, und in Anspruch 14 auf ein Mustererkennungssystem, das solche Modelle verwendet.

Diese und weitere Aspekte und Vorteile der Erfindung werden im Folgenden an Hand der Ausführungsbeispiele und insbesondere an Hand der beigefügten Zeichnungen näher erläutert. Es zeigen:

Fig. 1 eine Ausführungsform des erfindungsgemäßen Verfahrens zur diskriminativen Anpassung akustischer Referenzmodelle eines Spracherkennungssystems gemäß Anspruch 1,

Fig. 2 eine Ausführungsform der erfindungsgemäßen Beschränkung der Menge der gegebenen akustischen Sprachsignale gemäß des kennzeichnenden Teils von Anspruch 3,

Fig. 3 und 4 erfindungsgemäße Varianten von Iterationsverfahren gemäß Anspruch 6 und

Fig. 5 eine Ausführungsform eines Spracherkennungssystems gemäß Anspruch 10.

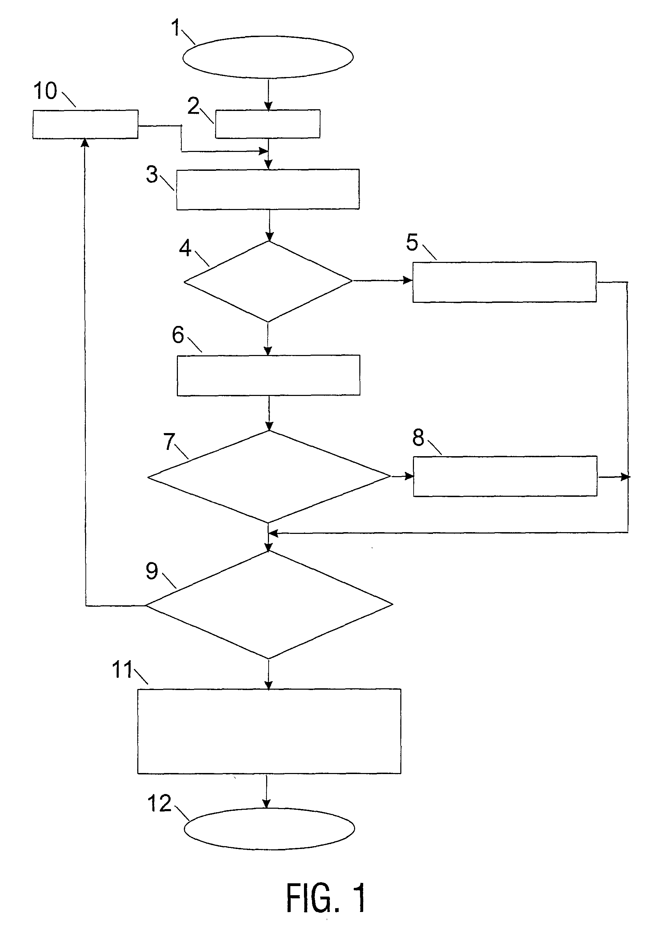

Fig. 1 zeigt eine Ausführungsform des erfindungsgemäßen Verfahrens zur diskriminativen Anpassung akustischer Referenzmodelle eines Spracherkennungssystems gemäß Anspruch 1 in Form eines Flussdiagramms.

Das Verfahren startet im Block 1 und geht dann über zu Block 2. Im Block 2 wird einer Zählervariablen r der initiale Wert 1 zugewiesen: $r \leftarrow 1$. Danach wird die Kontrolle an Block 3 übergeben, wo für das r-te akustische Sprachsignal der Menge der gegebenen akustischen Sprachsignale unter Verwendung der gegebenen akustischen Referenzmodelle eine erste bewertete Wortfolge $W^1_r$ und deren Bewertung $b^1_r$ erzeugt werden. Danach geht die Kontrolle weiter an den Entscheidungsblock 4. Dort wird die erste Wortfolge $W^1_r$ mit der zum r-ten akustischen Sprachsignal gehörigen gesprochenen Wortfolge $W_r$ verglichen.

Sind die erste Wortfolge $W^1_r$ und die gesprochene Wortfolge $W_r$ verschieden: $W^1_r \neq W_r$, so geht die Kontrolle an Block 5, in dem die erste Wortfolge $W^1_r$ als alternative Wortfolge zur gesprochenen Wortfolge $W_r$ zugeordnet wird: $W^a_r \leftarrow W^1_r$, worauf die Kontrolle weiter an Block 9 geht. Sind die erste Wortfolge $W^1_r$ und die gesprochene Wortfolge $W_r$ jedoch identisch: $W^1_r = W_r$, so geht die Kontrolle von Block 4 zu Block 6, in dem die zweite bewertete Wortfolge $W^2_r$ und deren Bewertung $b^2_r$ erzeugt werden, worauf die Kontrolle weiter an Block 7 geht. Im Block 7 wird dann der Unterschied in den Bewertungen der ersten und zweiten Wortfolge mit einem ersten Schwellwert $s_1$ verglichen. Ist der Bewertungsunterschied kleiner als dieser erste Schwellwert: $b^2_r - b^1_r < s_1$, so geht die Kontrolle an Block 8, in dem die zweite Wortfolge $W^2_r$ als alternative Wortfolge zur gesprochenen Wortfolge $W_r$ zugeordnet wird: $W^a_r \leftarrow W^2_r$, worauf die Kontrolle weiter an Block 9 geht. Ist dieser Bewertungsunterschied jedoch größer oder gleich diesem ersten Schwellwert: $b^2_r - b^1_r \geq s_1$, so geht die Kontrolle von Block 7 direkt zu Block 9.

Im Block 9 wird untersucht, ob das r-te akustische Sprachsignal das letzte der Menge der gegebenen akustischen Sprachsignale war, d.h. ob bei Abarbeitung des Verfahrens bereits alle gegebenen akustischen Sprachsignale behandelt wurden. Ist dies nicht der Fall, so geht die Kontrolle an Block 10, wo die Zählervariable r um 1 inkrementiert wird: $r \leftarrow r+1$, worauf die Kontrolle wieder in Block 3 eintritt. Wurden jedoch alle gegebenen akustischen Sprachsignale bereits behandelt, so geht die Kontrolle an Block 11, in dem unter Benutzung der so bestimmten Zuordnungen $W^a_r$ die Anpassung der betroffenen gegebenen akustischen Referenzmodelle durchgeführt wird. Danach geht die Kontrolle an Block 12, in dem das Verfahren beendet wird.

Die Erzeugung der ersten und zweiten bewerteten Wortfolge $W^1_r$ und $W^2_r$ in den Blöcken 3 bzw. 6 erfolgt dabei bevorzugt durch einen Erkennungsschritt unter Benutzung der gegebenen akustischen Referenzmodelle. Dazu kann ein beliebiges dem Fachmann bekanntes Erkennungsverfahren verwendet werden, das zum Ziel hat, zu einem gegebenen akustischen Sprachsignal möglichst die Wortfolgen mit den besten Bewertungen zu finden. Dabei kann es durchaus vorkommen, dass zu einem gegebenen akustischen Sprachsignal mehrere verschiedene Wortfolgen mit derselben Bewertung gefunden werden. Es kann aber auch vorkommen, dass auf Grund der üblicherweise benutzten Verfahren zur Begrenzung des Suchaufwandes bei der Erkennung (pruning) nur eine einzige oder aber gar keine Wortfolge gefunden wird.

Für das erfindungsgemäße Verfahren ist es günstig, ein Erkennungsverfahren zu verwenden, das im Rahmen seiner Möglichkeiten neben der Wortfolge mit der besten Bewertung noch einen Wortgraphen liefert, der in kompakter Weise die bzgl. ihrer Bewertungen besten Wortfolgen mit ihren Bewertungen implizit enthält. Aus einem solchen Wortgraphen lassen sich dann mit verhältnismäßig geringem Aufwand die Wortfolgen mit ihren Bewertungen explizit erhalten (s. z.B. B.H. Tran, F. Seide, V. Steinbiss: A word graph based N-best search in continuous speech recognition. Proc. ICSLP '96, Philadelphia, PA, pp. 2127-2130). Es ist dabei nicht notwendig, dass das eingesetzte Erkennungsverfahren die Wortfolgen mit den tatsächlich besten Bewertungen findet, sondern es genügt, wenn es dies in dem Fachmann bekannter Weise approximativ tut.

Als erste bewertete Wortfolge $W^1_r$ wird vorteilhaft die von dem Erkennungsverfahren direkt gelieferte Wortfolge mit der besten Bewertung genommen. Gibt es dabei mehrere verschiedene Wortfolgen mit derselben besten Bewertung, so kann willkürlich eine beliebige davon als erste bewertete Wortfolge $W^1_r$ verwendet werden. Üblicherweise übernimmt das Erkennungsverfahren diese Auswahl, da es die Wortfolgen ohnehin auf Grund seiner internen Struktur in einer bestimmten Reihenfolge erzeugt.

Die zweite bewertete Wortfolge $W^2_r$ wird vorteilhaft als die zweitbeste Wortfolge aus dem vom Erkennungsverfahren gelieferten Wortgraphen extrahiert. Gibt es dabei mehrere verschiedene Wortfolgen mit derselben besten Bewertung, so besitzen die erste und die zweite bewertete Wortfolge $W^1_r$ und $W^2_r$ denselben Zahlenwert als Bewertung. Hier ist dann bei Anwendung des Extraktionsverfahren darauf zu achten, dass als zweite bewertete Wortfolge eine zur ersten bewerteten Wortfolge verschiedene erzeugt wird: $W^2_r \neq W^1_r$. Dies lässt sich z.B. durch einen geeigneten Aufbau des Extraktionsverfahrens erreichen (s. den o.g. Aufsatz von Tran et al.).

Immer ist bei der Erzeugung der zweiten bewerteten Wortfolge $W^2_r$ darauf zu achten, dass diese sich von der ersten bewerteten Wortfolge $W^1_r$ unterscheidet: $W^2_r \neq W^1_r$. So kann es im Falle von Homophonen u.U. vorkommen, dass zwei Wortfolgen $W^1$ und $W^2$ (akustisch) identisch sind: $W^1=W^2$, während ihre zugehörigen Bewertungen $b^1$ und $b^2$ sich unterscheiden: $b^1 \neq b^2$. Sollte dieser Fall bei der von dem Erkennungsverfahren gelieferten zweitbesten Wortfolge auftreten, so ist durch das Erkennungsverfahren so lange die jeweils nächstbeste Wortfolge zu erzeugen, bis man die erste von der ersten bewerteten Wortfolge $W^1_r$ verschiedene Wortfolge als die zweite bewertete Wortfolge $W^2_r$ erhält.

Für den Fall, dass z.B. auf Grund des Prunings im Erkennungsschritt gar keine Wortfolge für das gegebene akustische Sprachsignal erzeugt werden konnte, wird dieses Sprachsignal für das Verfahren in Fig. 1 ignoriert. Konnte zwar die erste bewertete Wortfolge $W^1_r$ erzeugt werden, so kann aber u.U. die zweite bewertete Wortfolge $W^2_r$ nicht erzeugt werden, z.B. wenn der Wortgraph keine weiteren Wortfolgen mehr enthält. In diesem Fall wird dieses Sprachsignal nur dann verwendet, wenn die erste bewertete Wortfolge von der zugehörigen gesprochenen Wortfolge abweicht: $W^1_r \neq W_r$, so dass sich die Erzeugung der zweiten bewerteten Wortfolge $W^2_r$ erübrigt. Anderenfalls wird auch dieses Sprachsignal ignoriert. Aus Gründen der Einfachheit wurden diese Sonderfälle nicht in Fig. 1 dargestellt. Die in Fig. 1 gezeigte Ausführungsform der Erfindung ist jedoch inklusive dieser Sonderfälle zu verstehen.

Als Bewertung einer Wortfolge $W$ kann der eingangs erwähnte negative Logarithmus der bedingten Wahrscheinlichkeit, $- \log P(W \mid X_r)$, verwendet werden. Manche Erkennungsverfahren verwenden aber auch Größen, z.T. als Score bezeichnet, die zwar in einem engen Zusammenhang mit diesem negativen Logarithmus stehen, aber nicht exakt mit ihm übereinstimmen. Weitere Möglichkeiten sind die aus der Literatur bekannten Konfidenzmaße. Alle diese Bewertungen stellen Bewertungen im Sinne der Erfindung dar. Verwendet man als Bewertung einen solchen negativen Logarithmus, so kann man als Unterschied zwischen den Bewertungen der ersten und zweiten Wortfolge $W^1_r$ und $W^2_r$ die Differenz dieser Bewertungen verwenden: $b^2_r - b^1_r$, was bei der Besprechung von Block 7 der Fig. 1 angenommen wurde.

Bei der Anpassung der betroffenen akustischen Referenzmodelle in Block 11 werden nur die vorab bestimmten Zuordnungen der alternativen Wortfolgen $W^a_r$ zu den gesprochenen Wortfolgen $W_r$ verwendet. Die gegebenen akustischen Sprachsignale, für die die erste Wortfolge mit der zugehörigen gesprochenen Wortfolge übereinstimmt: $W^1_r = W_r$ und für die der Unterschied zwischen den Bewertungen der ersten und der zweiten Wortfolge größer oder gleich dem ersten Schwellwert ist: $b^2_r - b^1_r \geq s_1$, werden bei der Anpassung ignoriert.

Genauso werden, wie bereits gesagt, diejenigen Sprachsignale ignoriert, für die die erste bewertete Wortfolge gar nicht erzeugt werden kann, oder für die die zweite bewertete Wortfolge nicht erzeugt werden kann, wenn die erste Wortfolge mit der gesprochenen Wortfolge übereinstimmt ($W^1_r = W_r$). Statt die so bezeichneten Sprachsignale für die Anpassung völlig zu ignorieren, besteht aber grundsätzlich auch die Möglichkeit, sie doch für die Anpassung zu benutzen, in dem man für sie die jeweils benötigte Zuordnung der Menge von alternativen Wortfolgen nach einem anderen als dem erfindungsgemäßen Verfahren vornimmt.

Bei dem in Block 11 durchgeführten Anpassungsschritt handelt es sich um eine diskriminative Neuschätzung der gegebenen akustischen Referenzmodelle. Je nachdem, wie diese Referenzmodelle konkret gewählt wurden (z.B. Ganzwort- oder Phonemmodelle), und danach, welche Zuordnungen vorab berechnet wurden, ist es möglich, dass manche dieser Referenzmodelle in keiner dieser Zuordnungen auftauchen, d.h. dass besagte Referenzmodelle weder in einer der gesprochenen Wortfolgen $W_r$ der nicht ignorierten Sprachsignale noch in einer der zugeordneten alternativen Wortfolgen $W^a_r$ vorkommen. Es besteht dann die Möglichkeit, diese Referenzmodelle bei dem Anpassungsschritt auszusparen, d.h. diese Referenzmodelle in ihrer alten Form zu belassen.

Die übrigen in diesem Sinne "beobachteten" Referenzmodelle können mit einem der dem Fachmann bekannten diskriminativen Schätzungsverfahren neugeschätzt werden, d.h. die neu bestimmten Referenzmodelle treten dabei an die Stelle der bisher gegebenen Referenzmodelle. Bei dieser Neuschätzung ist die gesprochene Wortfolge $W_r$ von der vorab zugeordneten alternativen Wortfolge $W^a_r$ zu diskriminieren. In der Terminologie des eingangs erwähnten Aufsatzes von Schlüter et. al. besteht die Menge der alternativen Wortfolgen (set of alternative word sequences $M_r$) aus genau der alternativen Wortfolge $W^a_r$.

Als diskriminative Schtätzungsverfahren kommen im Rahmen der Erfindung jetzt insbesondere auch die einfachen Varianten dieser Verfahren in Betracht. So lässt sich in der Terminologie von Schlüter et. al. als Glättungsfunktion (smoothing function *f*) genau wie beim korrektiven Training (corrective training, CT) auch einfach die Identitätsfunktion wählen. Natürlich ist aber auch wie beim falsifizierenden Training (falsifying training, FT) die Wahl der Sigmoidfunktion möglich.

Während in dieser Ausführungsform bei dem in Block 11 dargestellten Anpassungsschritt die nicht "beobachteten" Referenzmodelle nicht angepasst werden, ist es auch denkbar, auch diese Referenzmodelle z.B. durch ein Glättungsverfahren mit anzupassen. Aus der Literatur sind hier z.B. die Vektorfeldglättungen (vector field smoothing) bekannt.

In einer weiteren Ausführungsform der Erfindung ist es vorgesehen, den in Block 11 dargestellten Anpassungsschritt nicht als diskriminative Neuschätzung, sondern als diskriminative Adaption der akustischen Referenzmodelle durchzuführen. Aus der Literatur sind mehrere Verfahren zur Adaption akustischer Referenzmodelle, d.h. der Anpassung der Referenzmodelle auf neue Gegebenheiten wie z.B. einen neuen Sprecher oder einen neuen Kanal, bekannt. Ein Beispiel ist das sogenannte MLLR-Verfahren (Maximum Likelihood Linear Regression), das ein Maximum-Likelihood Kriterium optimiert, dessen Grundidee sich jedoch auch auf die Optimierung eines diskriminativen Kriteriums übertragen lässt. Ein solches diskriminatives Adaptionsverfahren ist z.B. aus der Veröffentlichung "F. Wallhoff, D. Willett, G. Rigoll. Frame Discriminative and Confidence-Driven Adaptation for LVCSR. in IEEE Intern. Conference on Acoustics, Speech, and Signal Processing (ICASSP), Istanbul, Türkei, Juni 2000" bekannt.

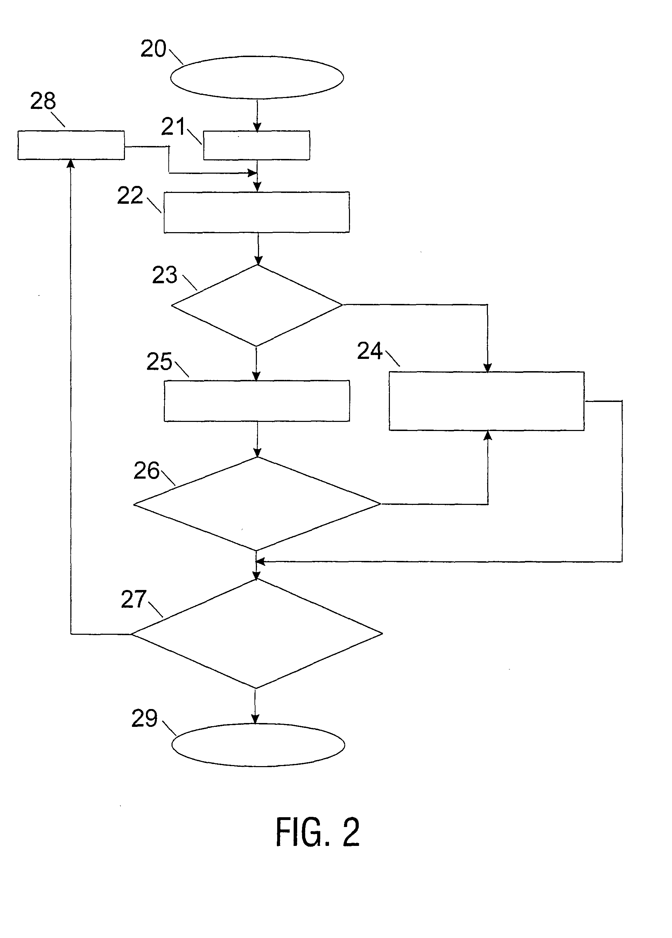

Fig. 2 zeigt eine Ausführungsform der erfindungsgemäßen Beschränkung der Menge der gegebenen akustischen Sprachsignale in Form eines Flussdiagramms.

Das Verfahren startet in Block 20, in dem die nötigen Initialisierungen und insbesondere die Initialisierung der neuen Menge der gegebenen akustischen Sprachsignale und ihrer gesprochenen Wortfolgen zur leeren Menge ($T_{neu} \leftarrow \varnothing$) vorgenommen werden, und geht dann über zu Block 21. Im Block 21 wird einer Zählervariablen r der initiale Wert 1 zugewiesen: $r \leftarrow 1$. Danach wird die Kontrolle an Block 22 übergeben, wo für das r-te akustische Sprachsignal der Menge der gegebenen akustischen Sprachsignale unter Verwendung der gegebenen akustischen Referenzmodelle eine erste bewertete Wortfolge $W^1_r$ und deren Bewertung $b^1_r$ erzeugt werden. Danach geht die Kontrolle weiter an den Entscheidungsblock 23. Dort wird die erste Wortfolge $W^1_r$ mit der zum r-ten akustischen Sprachsignal gehörigen gesprochenen Wortfolge $W_r$ verglichen.

Sind die erste Wortfolge $W^1_r$ und die gesprochene Wortfolge $W_r$ verschieden: $W^1_r \neq W_r$, so geht die Kontrolle an Block 24, in dem das r-te akustische Sprachsignal $X_r$ und seine zugehörige gesprochene Wortfolge $W_r$ zur neuen Menge hinzugefügt werden: $T_{neu} \leftarrow T_{neu} \cup \{(X_r, W_r)\}$, worauf die Kontrolle weiter an Block 27 geht. Sind die erste Wortfolge $W^1_r$ und die gesprochene Wortfolge $W_r$ jedoch identisch: $W^1_r = W_r$, so geht die Kontrolle von Block 23 zu Block 25, in dem die zweite bewertete Wortfolge $W^2_r$, und deren Bewertung $b^2_r$ erzeugt werden, worauf die Kontrolle weiter an Block 26 geht. Im Block 26 wird dann der Unterschied in den Bewertungen der ersten und zweiten Wortfolge mit einem zweiten Schwellwert $s_2$ verglichen. Ist der Bewertungsunterschied kleiner als dieser zweite Schwellwert: $b^2_r - b^1_r < s_2$, so geht die Kontrolle an Block 24, in dem wie oben beschrieben das r-te akustische Sprachsignal $X_r$ und seine zugehörige gesprochene Wortfolge $W_r$ zur neuen Menge hinzugefügt werden: $T_{neu} \leftarrow T_{neu} \cup \{(X_r, W_r)\}$. Danach geht die Kontrolle weiter an Block 27. Ist dieser Bewertungsunterschied jedoch größer oder gleich diesem zweiten Schwellwert: $b^2_r - b^1_r \geq s_2$, so geht

die Kontrolle von Block 26 direkt zu Block 27.

Im Block 27 wird untersucht, ob das r-te akustische Sprachsignal das letzte der Menge der gegebenen akustischen Sprachsignale war, d.h. ob bei Abarbeitung des Verfahrens bereits alle gegebenen akustischen Sprachsignale behandelt wurden. Ist dies nicht der Fall, so geht die Kontrolle an Block 28, wo die Zählervariable r um 1 inkrementiert wird: $r \leftarrow r+1$, worauf die Kontrolle wieder in Block 22 eintritt. Wurden jedoch alle gegebenen akustischen Sprachsignale bereits behandelt, so geht die Kontrolle schließlich an Block 29, in dem die neue Menge an die Stelle der alten Menge der gegebenen akustischen Sprachsignale, deren gesprochene Wortfolge jeweils bekannt ist, tritt: $T_{alt} \leftarrow T_{neu}$, und das Verfahren beendet wird.

Die hier beschriebene Bildung der neuen Menge der gegebenen akustischen Sprachsignale und deren zukünftige Verwendung an Stelle der alten Menge kann auf verschiedene Arten speichertechnisch realisiert werden. Z.B. kann die neue Menge zunächst durch Kopie der aus der alten Menge ausgewählten Sprachsignale erstellt werden, wonach dann die neue Menge durch Umstellung eines Speicherverweises an Stelle der alten benutzt wird. Alternativ kann die neue Menge aber auch als Menge von Verweisen auf die entsprechenden Sprachsignale der alten Menge gebildet werden. Auch andere dem Fachmann geläufige Lösungen sind vorstellbar.

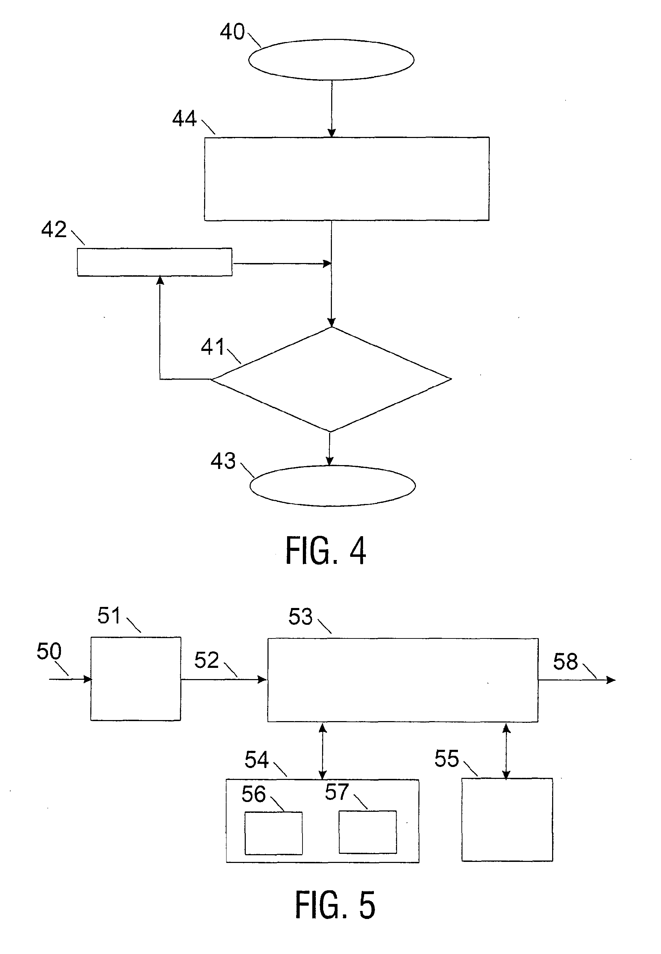

Aus dem Vergleich der beiden Flussdiagramme in den Fig. 1 und 2 sind die Gemeinsamkeiten der beiden dargestellten Verfahren offensichtlich. Daher gelten zunächst die zu Fig. 1 gemachten Bemerkungen zur Erzeugung der ersten und zweiten bewerteten Wortfolge $W^1{}_r$ und $W^2{}_r$ und zur Natur der Bewertungen und des Bewertungsunterschiedes auch für Fig. 2. Weiter ist deutlich, dass sich das Verfahren aus Fig. 2 gemeinsam mit dem Verfahren aus Fig. 1 durchführen lässt, da die wesentlichen Verfahrensschritte wie z.B. das Erzeugen der ersten und zweiten Wortfolge identisch sind. Auf diesen Umstand wird noch näher bei der Beschreibung von Fig. 5 eingegangen.

Die in den obigen Ausführungsformen benutzten Schwellwerte $s_1$ und $s_2$ können zum einen als bestimmte Bewertungsunterschiede vorgegeben werden. Sie geben dann eine Maßzahl an, bei deren Überschreitung die zweite Wortfolge als, intuitiv gesprochen, von untergeordneter Bedeutung gegenüber der ersten Wortfolge eingestuft wird.

Die absolute Größe der Bewertung einer Wortfolge und in gewissem Maße als Folge auch die absolute Größe des Bewertungsunterschiedes zwischen zwei Wortfolgen können jedoch von Sprachsignal zu Sprachsignal stark differieren sowie weiter noch von Details des Spracherkennungssystem wie z.B. seinem Lexikon abhängen. Daher besteht eine andere Möglichkeit der Bestimmung dieser Schwellwerte darin, für jeden von ihnen eine bestimmte Zahl ($Q_1$ für $s_1$ und $Q_2$ für $s_2$) vorzugeben, die zwischen 0 und 1 liegt: $0 \leq Q_1 \leq$ 1, $0 \leq Q_2 \leq 1$. Die Schwellwerte $s_1$ und $s_2$ ergeben sich dann als $Q_1$- und $Q_2$-Quantil der statistischen Verteilungsfunktion der Unterschiede in den Bewertungen der ersten und zweiten Wortfolge derjenigen gegebenen akustischen Sprachsignale, deren erste Wortfolge mit der gesprochenen Wortfolge übereinstimmt. Zur Berechnung der Quantile können dabei natürlich nur die Sprachsignale benutzt werden, für die das Spracherkennungssystem sowohl eine erste als auch eine zweite Wortfolge liefert.

Mit der Benutzung dieser Quantilmethode erreicht man also eine gewisse Unabhängigkeit von den Details der konkret vorgegebenen Anpassungssituation. Weiterhin ergibt sich eine einfache und näherungsweise lineare Steuerung des Rechenaufwandes, da das Quantil annähernd linear mit der Größe des für die Berechnung der Zuordnungen benutzten Teiles der Menge der gegebenen akustischen Sprachsignale zusammenhängt.

Damit bei Benutzung des zweiten Schwellwertes $s_2$ die Steuerung durch den ersten Schwellwert $s_1$ noch seine Wirkung entfalten kann, muss $s_2$ größer als $s_1$ gewählt werden: $s_2 > s_1$. Entsprechend muss bei Benutzung der Quantilmethode $Q_2$ größer als $Q_1$ gewählt werden: $Q_2 > Q_1$. Zum grundsätzlichen Funktionieren der Methode ist eine solche Wahl aber nicht notwendig.

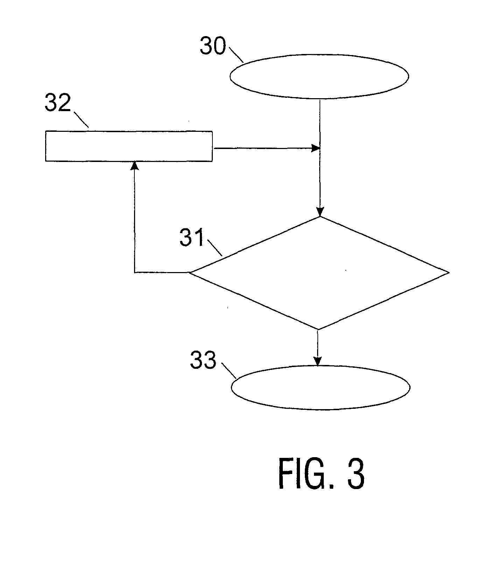

Die Fig. 3 und 4 zeigen Varianten von iterativen diskriminativen Anpassungsverfahren, bei denen ein erfindungsgemäßes Verfahren nach einem der Ansprüche 1 bis 5 als einzelner Iterationsschritt benutzt wird. Beiden Varianten ist gemeinsam, dass das Verfahren nach einem der Ansprüche 1 bis 5 so lange iteriert wird, bis ein Haltekriterium erfüllt ist. Für dieses Haltekriterium kommen alle dem Fachmann bekannten Möglichkeiten in Betracht wie z.B. eine vorgegebene Zahl von Iterationsschritten oder das Erreichen eines Minimums der Fehlerrate auf der Trainingsmenge oder auch auf einer separaten Validierungsmenge.

Fig. 3 zeigt zunächst ein einfaches Iterationsschema in Form eines Flussdiagramms. Das Verfahren startet in Block 30. Danach wird im Entscheidungsblock 31 das Haltekriterium getestet. Ist dieses nicht erfüllt, so wird im Block 32 ein Verfahren nach einem der Ansprüche 1 bis 5 abgearbeitet, das die vorher gegebenen akustischen Referenzmodelle erfindungsgemäß anpasst. Nach Block 32 ist ein Iterationsschritt beendet und das Verfahren tritt wieder in Block 31 ein. Ist aber in Block 31 das Haltekriterium erfüllt, so geht die Kontrolle an Block 33, in dem das Verfahren beendet wird.

In Fig. 4 wird dieses einfache Iterationsschema um einen vor der eigentlichen Iterationsschleife liegenden Block 44 erweitert. D.h. die Blöcke 40 bis 43 entsprechen den Blöcken 30 bis 33 der Fig. 3. Gleiches gilt für die Übergänge zwischen diesen Blöcken mit der Ausnahme, dass in Fig. 4 der Block 44 zwischen die Blöcke 40 (Start) und 41 (Test des Haltekriteriums) geschoben ist.

Bei Block 44 handelt es sich um eine Abarbeitung eines Verfahren nach Anspruch 3. D.h. es wird bereits wie z.B. in Fig. 1 dargestellt eine Anpassung der akustischen Referenzmodelle vorgenommen. Gleichzeitig wird durch die gemeinsame Abarbeitung eines Verfahrens gemäß Fig. 2 die gegebene Menge der akustischen Sprachsignale und ihrer zugehörigen gesprochenen Wortfolgen unter Verwendung eines zweiten Schwellwertes $s_2$ eingeschränkt. Wie weiter oben erwähnt ist diese gemeinsame Abarbeitung der in den Fig. 1 und 2 dargestellten Verfahren wegen ihrer großen Gemeinsamkeiten problemlos möglich.

Bei der Anpassung der akustischen Referenzmodelle in Block 44 werden in jedem Fall nur die Zuordnungen von alternativen Wortfolgen zu den gesprochenen Wortfolgen der gegebenen akustischen Sprachsignale, die zu der unter Verwendung des zweiten Schwellwertes $s_2$ eingeschränkten Menge gehören, verwendet. Ist also der zweite Schwellwert kleiner als der erste Schwellwert: $s_2 < s_1$, so bestimmt allein der zweite Schwellwert $s_2$, welche Zuordnungen benutzt werden, und der erste Schwellwert $s_1$ ist ohne Bedeutung.

Ist einer oder sind beide der Schwellwerte $s_1$ und $s_2$ nur implizit über die Angabe eines jeweiligen Quantils der Verteilung der entsprechenden Bewertungsunterschiede vorgegeben, so genügt in Block 44 auch in diesem Fall zur Bestimmung der ersten und ggf. der zweiten Wortfolgen ein einziger Durchlauf durch die Trainingsmenge der gegebenen akustischen Sprachsignale. Gleichzeitig ergeben sich dadurch die benötigten Schwellwerte $s_1$ und $s_2$ in expliziter Form.

Dazu sind die in den Fig. 1 und 2 dargestellten Verfahren folgendermaßen abzuändern: Beim Durchlauf durch die Trainingsmenge werden zunächst nur jeweils ihre erste Wortfolge $W^1_r$, deren Bewertung $b^1_r$ und ggf. (wenn $W^1_r = W_r$) ihre zweite Wortfolge $W^2_r$ und deren Bewertung $b^2_r$ erzeugt. Weiter wird in den Fällen, in denen die erste Wortfolge von der gesprochenen Wortfolge abweicht: $W^1_r \neq W_r$, auch bereits die Zuordnung der alternativen Wortfolge zur gesprochenen Wortfolge vorgenommen: $W^a_r \leftarrow W^1_r$, und dieses Sprachsignal $X_r$ und seine gesprochene Wortfolge $W_r$ in die neue Menge der gegebenen akustischen Sprachsignale übernommen: $T_{neu} \leftarrow T_{neu} \cup \{(X_r, W_r)\}$.

In den anderen Fällen werden zunächst nur die zweite Wortfolge $W^2_r$ sowie ihr Bewertungsunterschied $b^2_r - b^1_r$ gespeichert. Aus der Menge der gespeicherten Bewertungsunterschiede lassen sich die gewünschten Schwellwerte $s_1$ und $s_2$ als Quantile der Verteilung dieser Bewertungsunterschiede explizit erhalten. Mit dem Schwellwert $s_1$ lassen sich dann aus der Menge der gespeicherten Bewertungsunterschiede und der gespeicherten zweiten Wortfolgen die noch fehlenden Zuordnungen der alternativen Wortfolgen erhalten: $W^a_r \leftarrow W^2_r$ sofern $b^2_r - b^1_r < s_1$ (Beachte: Bei diesen gespeicherten Wortfolgen war $W^1_r = W_r$). Weiter lassen sich mit dem Schwellwert $s_2$ aus der Menge der gespeicherten Bewertungsunterschiede die weiteren Sprachsignale $X_r$

und ihre gesprochenen Wortfolgen $W_r$ in die neue Menge der gegebenen akustischen Sprachsignale übernehmen: $T_{neu} \leftarrow T_{neu} \cup \{(X_r, W_r)\}$ sofern $b^2_r - b^1_r < s_2$.

Wenn, anders als bisher angenommen, die gesprochene Wortfolge eines gegebenen akustischen Sprachsignals der Trainingsmenge nicht bekannt ist, kann das erfindungsgemäße Verfahren in abgeänderter Form noch immer angewendet werden. Dazu nimmt man z.B. mit Hilfe eines Spracherkennungssystem eine Schätzung der (unbekannten) gesprochenen Wortfolge vor. Diese geschätzte Wortfolge tritt dann an die Stelle der (unbekannten) gesprochenen Wortfolge. Damit lassen sich alle vorher bezeichneten Verfahren ansonsten unverändert weiterhin durchführen. Als Schätzung der unbekannten gesprochenen Wortfolge kann z.B. auch die unter Verwendung der gegebenen akustischen Referenzmodelle erzeugte erste bewertete Wortfolge $W^1_r$ benutzt werden.

Obwohl die Erfindung bisher im Kontext der Anpassung akustischer Referenzmodelle eines Spracherkennungssystems beschrieben wurde, ist sie in gleicher Weise bei der diskriminativen Anpassung der Referenzmodelle allgemeiner Mustererkennungssysteme anwendbar. An die Stelle der akustischen Referenzmodelle eines Spracherkennungssystems treten die Referenzmodelle des Mustererkennungssystems. An die Stelle der Menge der gegebenen akustischen Sprachsignale, deren zugehörige gesprochene Wortfolge jeweils bekannt ist oder aber geschätzt wird, tritt die Menge der Trainingsmuster, deren Klassenzugehörigkeit jeweils bekannt ist oder aber geschätzt wird. An die Stelle der ersten und zweiten bewerteten Wortfolge eines gegebenen akustischen Sprachsignals treten die erste und zweite bewertete Klassenzugehörigkeit eines gegebenen Trainingsmusters. An die Stelle der Zuordnung einer alternativen Wortfolge tritt die Zuordnung einer alternativen Klassenzugehörigkeit. Mit diesen Ersetzungen sind die für Spracherkennungssysteme beanspruchten Verfahren ansonsten unverändert für allgemeine Mustererkennungssysteme durchführbar.

Fig. 5 zeigt die Grundstruktur eines Spracherkennungssystems, insbesondere eines Diktiersystems (z. B. FreeSpeech von Philips), als Spezialfall eines allgemeinen Mustererkennungssystems. Ein eingegebenes Sprachsignal 50 wird einer Funktionseinheit 51 zugeführt, die für dieses Signal eine Merkmalsextraktion (feature extraction) durchführt und dabei Merkmalsvektoren 52 erzeugt, die einer Verarbeitungseinheit 53 (matching unit) zugeführt werden. In der Verarbeitungseinheit 53, die das Erkennungsergebnis 58 ermittelt und ausgibt, wird in der bekannten Weise eine Pfadsuche durchgeführt, wobei ein akustisches Modell 54 (acoustic model) und ein Sprachmodell 55 (language model) eingesetzt werden. Das akustische Modell 54 umfasst einerseits Modelle für Wortuntereinheiten wie beispielsweise Triphone, denen akustische Referenzmodelle 56 zugeordnet sind, und ein Lexikon 57, das das verwendete Vokabular repräsentiert und mögliche Folgen von Wortuntereinheiten vorgibt. Die akustischen Referenzmodelle korrespondieren zu Hidden Markov Modellen. Das Sprachmodell 55 gibt N-Gramm-Wahrscheinlichkeiten an. Insbesondere wird ein Bigramm- oder ein Trigramm-Sprachmodell verwendet. Nähere Erläuterungen zum Aufbau dieses Spracherkennungssystems lassen sich beispielsweise der WO 99/18556 entnehmen, deren Inhalt hiermit in diese Patentanmeldung einbezogen wird.

**Patentansprüche**

1. Verfahren zur diskriminativen Anpassung akustischer Referenzmodelle eines Spracherkennungssystems, bei dem, ausgehend von einer Menge von gegebenen akustischen Sprachsignalen, deren zugehörige gesprochene Wortfolge jeweils bekannt ist, und ausgehend von gegebenen akustischen Referenzmodellen,

   - für eines der gegebenen akustischen Sprachsignale jeweils eine erste bewertete Wortfolge unter Verwendung der gegebenen akustischen Referenzmodelle erzeugt wird,
   - bei Abweichung dieser ersten Wortfolge von der gesprochenen Wortfolge diese erste Wortfolge als alternative Wortfolge zur gesprochenen Wortfolge zugeordnet wird,
   - anderenfalls für das gegebene akustische Sprachsignal eine zweite bewertete Wortfolge unter Verwendung der gegebenen akustischen Referenzmodelle erzeugt wird, und, sofern der Unterschied in den Bewertungen der ersten und zweiten Wortfolge kleiner ist als ein erster Schwellwert, diese zweite Wortfolge als alternative Wortfolge zur gesprochenen Wortfolge zugeordnet wird,
   - unter Verwendung der so bestimmten Zuordnung/Zuordnungen eine Anpassung von mindestens einem der gegebenen akustischen Referenzmodelle durchgeführt wird.

2. Verfahren zur diskriminativen Anpassung akustischer Referenzmodelle eines Spracherkennungssystems nach Anspruch 1,
   **dadurch gekennzeichnet,**
   **dass** die zu denjenigen gegebenen akustischen Sprachsignalen, deren erste Wortfolge mit der gesprochenen Wortfolge übereinstimmt und deren Unterschied in den Bewertungen ihrer ersten und zweiten Wortfolge größer oder gleich ist als der erste Schwellwert, gehörigen Zuordnungen nicht zur Anpassung irgendwelcher der gegebenen akustischen Referenzmodelle benutzt werden.

3. Verfahren zur diskriminativen Anpassung akustischer Referenzmodelle eines Spracherkennungssystems nach Anspruch 1 oder 2,
**dadurch gekennzeichnet,**
**dass** aus der Menge von gegebenen akustischen Sprachsignalen diejenigen Sprachsignale ausgeschlossen werden, deren erste Wortfolge mit der gesprochenen Wortfolge übereinstimmt und deren Unterschied in den Bewertungen ihrer ersten und zweiten Wortfolge größer oder gleich ist als ein zweiter Schwellwert, und auf diese Weise eine neue Menge von gegebenen akustischen Sprachsignalen gebildet wird, die an die Stelle der alten Menge von gegebenen akustischen Sprachsignalen tritt.

4. Verfahren zur diskriminativen Anpassung akustischer Referenzmodelle eines Spracherkennungssystems nach einem der Ansprüche 1 bis 3,
**dadurch gekennzeichnet,**
**dass** als erster Schwellwert ein erstes bestimmtes Quantil der statistischen Verteilung der Unterschiede in den Bewertungen der ersten und zweiten Wortfolge derjenigen gegebenen akustischen Sprachsignale, deren erste Wortfolge mit der gesprochenen Wortfolge übereinstimmt, verwendet wird.

5. Verfahren zur diskriminativen Anpassung akustischer Referenzmodelle eines Spracherkennungssystems nach einem der Ansprüche 3 bis 4,
**dadurch gekennzeichnet,**
**dass** als zweiter Schwellwert ein zweites bestimmtes Quantil der statistischen Verteilung der Unterschiede in den Bewertungen der ersten und zweiten Wortfolge derjenigen gegebenen akustischen Sprachsignale, deren erste Wortfolge mit der gesprochenen Wortfolge übereinstimmt, verwendet wird.

6. Verfahren zur diskriminativen Anpassung akustischer Referenzmodelle eines Spracherkennungssystems, bei dem bis zum Erreichen eines Haltekriteriums ein Verfahren gemäß einem der Ansprüche 1 bis 5 wiederholt eingesetzt wird.

7. Verfahren zur diskriminativen Anpassung akustischer Referenzmodelle eines Spracherkennungssystems, bei dem, ausgehend von einer Menge von gegebenen akustischen Sprachsignalen, deren zugehörige gesprochene Wortfolge jeweils bekannt ist oder geschätzt wird, und ausgehend von gegebenen akustischen Referenzmodellen,

   - für eines der gegebenen akustischen Sprachsignale jeweils eine erste bewertete Wortfolge unter Verwendung der gegebenen akustischen Referenzmodelle erzeugt wird,
   - bei Abweichung dieser ersten Wortfolge von der bekannten oder geschätzten Wortfolge diese erste Wortfolge als alternative Wortfolge zur bekannten oder geschätzten Wortfolge zugeordnet wird,

- anderenfalls für das gegebene akustische Sprachsignal eine zweite bewertete Wortfolge unter Verwendung der gegebenen akustischen Referenzmodelle erzeugt wird, und, sofern der Unterschied in den Bewertungen der ersten und zweiten Wortfolge kleiner ist als ein erster Schwellwert, diese zweite Wortfolge als alternative Wortfolge zur bekannten oder geschätzten Wortfolge zugeordnet wird,

unter Verwendung der so bestimmten Zuordnung/ Zuordnungen eine Anpassung von mindestens einem der gegebenen akustischen Referenzmodelle durchgeführt wird.

8. Akustische Referenzmodelle eines Spracherkennungssystems, die unter Benutzung eines Verfahrens gemäß einem der Ansprüche 1 bis 7 erzeugt wurden.

9. Datenträger mit akustischen Referenzmodellen eines Spracherkennungssystems nach Anspruch 8.

10. Spracherkennungssystem mit akustischen Referenzmodellen nach Anspruch 8.

11. Verfahren zur diskriminativen Anpassung von Referenzmodellen eines Mustererkennungssystems, bei dem, ausgehend von einer Menge von gegebenen Mustern, deren Klassenzugehörigkeit jeweils bekannt ist oder geschätzt wird, und ausgehend von gegebenen Referenzmodellen,

- für eines der gegebenen Muster jeweils eine erste bewertete Klassenzugehörigkeit unter Verwendung der gegebenen Referenzmodelle erzeugt wird,
- bei Abweichung dieser ersten Klassenzugehörigkeit von der bekannten oder geschätzten Klassenzugehörigkeit diese erste Klassenzugehörigkeit als alternative Klassenzugehörigkeit zur bekannten oder geschätzten Klassenzugehörigkeit zugeordnet wird,
- anderenfalls für das gegebene Muster eine zweite bewertete Klassenzugehörigkeit unter Verwendung der gegebenen Referenzmodelle erzeugt wird, und, sofern der Unterschied in den Bewertungen der ersten und zweiten Klassenzugehörigkeit kleiner ist als ein erster Schwellwert, diese zweite Klassenzugehörigkeit als alternative Klassenzugehörigkeit zur bekannten oder geschätzten Klassenzugehörigkeit zugeordnet wird,
- unter Verwendung der so bestimmten Zuordnung/Zuordnungen eine Anpassung von mindestens einem der gegebenen Referenzmodelle durchgeführt wird.

12. Referenzmodelle eines Mustererkennungssystems, die unter Benutzung eines Verfahrens gemäß Anspruch 11 erzeugt wurden.

13. Datenträger mit Referenzmodellen eines Mustererkennungssystems nach Anspruch 12.

14. Mustererkennungssystem mit Referenzmodellen nach Anspruch 12.

FIG. 1

FIG. 2

FIG. 3

FIG. 4

FIG. 5